# EUROPÄISCHE PATENTSCHRIFT

(11) **EP 0 716 279 B1**
(45) Veröffentlichungstag und Bekanntmachung des Hinweises auf die Patenterteilung: **26.09.2001**
(21) Anmeldenummer: 95116495.3
(22) Anmeldetag: 19.10.1995
(51) Int. Cl.: F25D 29/00, G01K 1/14

(54) **Haushaltskühlgerät**
Domestic refrigerator
Réfrigérateur domestique

(30) Priorität: 05.12.1994 DE 4443215
(43) Veröffentlichungstag der Anmeldung: 12.06.1996
(73) Patentinhaber: BSH Bosch und Siemens Hausgeräte GmbH, 81669 München (DE)
(72) Erfinder: Nowak, Friedhelm, D-89537 Giengen (DE); Neuner, Friedrich-Wilhelm, D-89537 Giengen (DE)

(56) Entgegenhaltungen:
- EP-A- 0 463 597
- CH-A- 433 410
- DE-U- 9 112 478
- GB-A- 859 093
- US-A- 2 208 272
- US-A- 4 826 540

## Beschreibung

Die Erfindung betrifft ein Haushaltskältegerät mit einem ein Außengehäuse, einen Innenbehälter und eine dazwischenliegende Wärmeisolationsschicht aufweisenden wärmeisolierenden Gehäuse, innerhalb welchem wenigstens ein von einer wärmeisolierenden Tür abschließbarer Kälteraum angeordnet ist, dessen Raumtemperatur von einem wärmeisolationsseitig angeordneten Temperaturfühler erfasst ist.

Bei den Kühlgeräten ist es bekannt, deren Kühlraum mit einem innerhalb ihres Kühlraums angeordneten, von der Kühlraumluft beaufschlagten Temperaturfühler zu erfassen. Hierbei ist der Temperaturfühler über die Wärmeisolation des Kühlgerätegehäuses in den Kühlraum eingebracht. Um zu vermeiden, dass das in flüssigen Ausgangskomponenten zur Anwendung kommenden Wärmeisolationsmaterial weder in den Kühlraum eindringt noch die elektrischen Anschlussstellen zwischen dem Temperaturfühler und damit elektrisch kontaktierten Anschlussleitungen korrodierend benetzt, sind in beiden Fällen umfangreiche, oftmals technisch sehr aufwendige Abdichtmaßnahmen vorzusehen. Außerdem bringt eine derartige Lösung mit sich, das sowohl der Temperaturfühler als auch die elektrischen Anschlussleitungen im Fehlerfall nicht mehr zugängig sind.

Darüber hinaus ist aus der CH-PS 433 410 ein Kühlschrank bekannt, in dessen Wärmeisolation ein Kanal zum Einbringen eines Temperaturfühlers vorgesehen ist, der gegenüber dem Ende des Kanals vorsteht und über eine Kontaktstelle aus wärmeleitendem Material mit der Kühlschrank-Innenverkleidung, an deren Außenseite wärmeleitend angekoppelt ist. Bei dieser Art der Temperaturerfassung kommt ein beidseitig geöffnetes Rohr zur Anwendung welches in das Wärmeisolationsmaterial des Kühlschrankgehäuses eingebettet ist. Der Wärmeübergang von der Außenseite des Kühlschrank-Innenbehälters zu dem Temperaturfühler findet demnach nicht über die Aufnahme sondern über die aus wärmeleitendem Material gebildete Kontaktstelle statt.

Ferner ist aus der GB-PS 859 093 ein wärmeisolierendes Gehäuse bekannt, in dessen Wärmeisolation eine Aufnahme zur Einbringung eines Temperaturfühlers vorgesehen ist. Hierbei ist dann der Temperaturfühler mit wärmeisolierenden Abstandselementen innerhalb der zu seiner Einbringung dienende Aufnahme fixiert, so dass eine unmittelbare Temperaturübertragung vom Innenbehälter des wärmeisolierenden Gehäuses auf den Temperaturfühler vermieden ist.

Der Erfindung liegt die Aufgabe zugrunde, einen Temperaturfühler zur Erfassung der in einem Kühlraum der in einem Haushaltskühlgerätes herrschenden Temperatur derart anzuordnen, das sich einerseits eine präzise Temperaturerfassung durch den Temperaturfühler ergibt und andererseits an dessen Montage und Zugänglichkeit im Fehlerfall gegenüber dem Stand der Technik wesentlich vereinfacht und verbessert ist.

Diese Aufgabe wird gemäß der Erfindung dadurch gelöst, dass der Temperaturfühler in einer die Wärmeisolation des Gehäuses durchdringenden, den Temperaturfühler aufnehmenden Aufnahme angeordnet und in der ihn aufnehmenden Aufnahme zur Temperaturerfassung im Kälteraum in wärmeleitendem Kontakt an die der Wärmeisolation zugewandte Außenseite des Innenbehälters herangeführt ist.

Durch die erfindungsgemäße Lösung ist stets sichergestellt, dass die zur präzisen Erfassung der Kühlraumtemperatur zweckmäßigste Position für den Temperaturfühler während des gesamten Fertigungsablaufes des Kühlgerätes aber vor allem während des Einbringens der Wärmeisolation zwischen dem Außengehäuse und dem Innenbehälter des Kühlgerätes positionsgenau eingehalten ist. Außerdem ermöglicht eine derartige Lösung eine weitestgehend am Ende des Fertigungsprozesses stattfindende Montage des Temperaturfühlers, so dass auf Schutzmaßnahmen für den Temperaturfühler während des gesamten Fertigungsablaufes des Kühlgerätes verzichtet werden kann. Außerdem bedarf es zur Anbringung des Temperaturfühlers keiner Durchbrüche im Behälter, so dass sich aufwendige Abdichtmaßnahmen gegen das in flüssigen Ausgangskomponenten zwischen dem Außengehäuse und dem Innenbehälter eingebrachte Wärmeisolationsmaterial zur Verhinderung des Materialeintrittes in den Kühlraum erübrigen. Ferner ist sichergestellt, dass ein Eintreten des gegebenenfalls aus dem Wärmeisolationsmaterial entweichenden Treibmittels in den Kühlraum vermieden ist.

Gemäß einer bevorzugten Ausführungsform des Gegenstandes der Erfindung ist vorgesehen, dass die Aufnahme als Rohrkörper ausgebildet ist, welcher wenigstens weitestgehend in die Wärmeisolation des Gehäuses eingebettet ist und den Temperaturfühler aufzunehmen und wenigstens annähernd zu führen vermag.

Durch eine derartige Lösung ist es möglich, den Temperaturfühler auf einfache Weise und gezielt an die zweckmäßigste Position für die Temperaturerfassung im Kühlraum zu bringen, ohne dabei zusätzliche Montagehilfen einsetzen zu müssen. Ferner ist der Temperaturfühler samt seinen elektrischen Anschlussleitungen im Schadensfalle auf einfache Weise ohne zusätzliche Demontagemaßnahmen auszutauschen. Des weiteren bietet die als Rohrkörper ausgebildete Aufnahme einen zusätzlichen Schutz für den Temperaturfühler.

Besonders genau erfasst wird die Temperatur im Kühlraum eines Kühlgerätes, wenn nach einer nächsten vorteilhaften Ausgestaltung des Gegenstandes der Erfindung vorgesehen ist, dass der Rohrkörper außenseitig an einer der Seitenwände des Innenbehälters angeordnet und dort festgesetzt ist.

Gemäß einer weiteren bevorzugten Ausführungsform des Gegenstandes der Erfindung ist vorgesehen, daß der Rohrkörper einseitig verschlossen ausgebildet ist und mit seiner verschlossenen Stirnseite voraneilend innerhalb der Wärmeisolation angeordnet ist.

Durch eine derartige Maßnahme ist stets sichergestellt, daß das in flüssigen Ausgangskomponenten zwischen dem Außengehäuse und dem Innenbehälter eingebrachte Wärmeisolationsmaterial nicht in den Rohrkörper eindringen kann und nach seinem Aushärten die Positionierung des Temperaturfühlers in die zur Temperaturerfassung im Kühlraum zweckmäßigste Position verhindert ist.

Entsprechend einer weiteren bevorzugten Ausführungsform des Gegenstandes der Erfindung ist vorgesehen, daß der Rohrkörper im Bereich seiner der verschlossenen Stirnseite gegenüberliegenden offenen Stirnseite in einem am Gehäuse festgesetzten Halteelement, die Materialstärke der Wärmeisolation durchdringend, gehalten ist.

Durch eine solche Lösung ist gewährleistet, daß der Rohrkörper auch während des Ausschäumvorganges stets lagerichtig in seiner bevorzugten Position gehalten und zugleich die Einbringung des Temperaturfühlers in den Rohrkörper deutlich erleichtert ist.

Gemäß einer letzten vorteilhaften Ausgestaltung des Gegenstandes der Erfindung ist vorgesehen, daß der Rohrkörper zylindrischen Querschnitt aufweist und an seinem offenen Ende mit einer entfernbaren Abdeckung versehen ist.

Durch eine derartige Ausbildung des Rohrkörpers ergeben sich auf einfache Weise gute Führungseigenschaften für den einzubringenden Temperaturfühler. Zudem ist gewährleistet, daß der Rohrkörper in seinem Innendurchmesser während des Fertigungsvorganges nicht in ungewollter Weise verschmutzt und somit die Einbringung des Temperaturfühlers gegebenenfalls erschwert ist.

Die Erfindung ist in der nachfolgenden Beschreibung anhand eines in der beigefügten Zeichnung vereinfacht dargestellten Ausführungsbeispieles verläutert. Es zeigen:
- Fig. 1: einen als Tischgerät ausgeführten Haushaltsgefrierschrank mit einem wärmeisolierenden Gehäuse und einer daran angeschlagenen, im Öffnungszustand dargestellten Tür, in raumbildlicher Darstellung von vorne,
- Fig. 2: in einem vergrößerten Ausschnitt den der Türanschlagseite gegenüberliegenden Frontbereich des wärmeisolierenden Gehäuses in seinem oberen Abschnitt gemäß der Schnittlinie II-II und
- Fig. 3: in Draufsicht den Ausschnitt des wärmeisolierenden Gehäuses entsprechend Fig. 2, geschnitten entlang der Schnittlinie III-III.

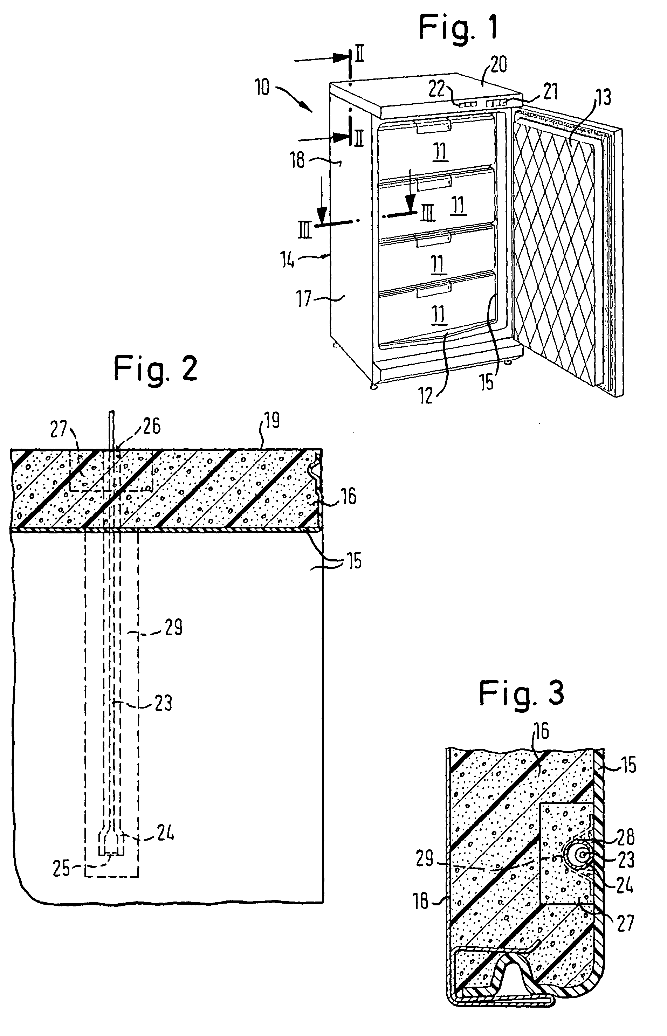

Gemäß Fig. 1 ist ein als Tischgerät ausgebildeter Haushaltsgefrierschrank 10 gezeigt, welches mit einem zur Aufnahme von den vertikalen Abständen übereinander angeordneten Gefriergutschubladen 11 dienenden Gefrierraum 12 ausgestattet ist. Dieser ist über eine wärmeisolierend ausgebildete Tür 13 zugänglich, welche an einem wärmeisolierenden Gehäuse 14 angeschlagen ist, welches zusammen mit der im Schließzustand befindlichen Tür 13 den Gefrierraum 12 wärmedämmend gegenüber der Außenatmosphäre des Gefriergerätes 10 abschließt. Das wärmeisolierende Gehäuse 14 weist einen aus einer Kunststoffplatine spanlos geformten, den Gefrierraum 12 hinsichtlich seines Volumens begrenzenden Innenbehälter 15 auf, welcher allseitig von einer Wärmeisolationsschicht 16 umgeben ist. Diese ist in flüssigen Ausgangskomponenten in einen durch die Beabstandung eines Außengehäuses 17 zum Innenbehälter 15 gebildeten Zwischenraum eingebracht, wobei das in flüssigen Ausgangskomponenten in den Zwischenraum eingebrachte Wärmeisolationsmaterial 16 mit den ihr zugewandten Seiten des Innenbehälters 15 und des Außengehäuses 17 einen festen Verbund eingeht. Das Außengehäuse 17 weist neben einer nicht näher bezeichneten Boden- und Rückwandfläche noch zwei durch im wesentlichen spanlos geformte Blechplatinen erzeugte Seitenflächen 18 und eine aus Pappe gebildete Deckenfläche 19 auf. Diese ist von einer Aufsatzplatte 20 abgedeckt, welche an ihrer der Tür 13 zugewandten Stirnseite Bedienelemente 21 und Anzeigeelemente 22 in Form von Temperaturanzeigen aufnimmt. Diese sind elektrisch mit einem hier nur schematisch dargestellten, die Temperatur im Gefrierraum 12 erfassenden, üblicherweise für derartige Einsatzfälle zur Anwendung kommenden Temperaturfühler 23 verbunden. Dieser ist, wie insb. aus Fig. 2 und Fig. 3 hervorgeht, in einer Aufnahme geführt, welche als Rohrkörper 24 mit zylindrischem Querschnitt ausgebildet ist und welcher innerhalb der Wärmeisolationsschicht 16 der der Türanschlagseite gegenüberliegenden Seitenwand des wärmeisolierenden Gehäuses 14, in wärmeleitendem Kontakt mit dem Innenbehälter 15, im Bereich des obersten Gefriergutschubladens 11, nahe dem Öffnungsrand der Zugangsöffnung zum Gefrierraum 12 angeordnet ist. Der Rohrkörper 24 weist eine innerhalb des Wärmeisolationsmaterials 16 angeordnete, gegenüber deren flüssigen Ausgangskomponenten dicht verschlossene Stirnseite 25 auf, um zu vermeiden, daß beim Einbringen des Wärmeisolationsmaterials 16 in den durch den Innenbehälter 15 und das Außengehäuse 17 gebildeten Zwischenraum dieses in den freien Querschnitt des Rohrkörpers 24 eindringen kann und dadurch eine zweckgemäße Positionierung des Temperaturfühlers 23 zur Erfassung der Gefrierraumtemperatur verhindert ist. Der verschlossenen Stirnseite 25 des Rohrkörpers 24 liegt dessen zweite Stirnseite 26 geradlinig gegenüber. Diese ist offen ausgebildet und vor dem Einbringen des Temperaturfühlers 23 von der als Pappe ausgeführten Deckenfläche 19 abgedeckt, welche mit einem entsprechenden Werkzeug zum Einbringen des Temperaturfühlers 23 durchstoßbar ist und welche während des Fertigungsablaufes, vor dem Eindringen des Temperaturfühlers 23 verhindert, daß in unbeabsichtigter Weise in dem durchströmbaren Querschnitt des Rohrkörpers 24 Schmutzpartikel gelangen, welche das Einbringen des Temperaturfühlers 23 behindern. Als Abdeckung der Stirnseite 26 des Rohrkörpers 24 kann auch ein separat aufsetzbares Abdeckelement dienen.

Der Rohrkörper 24 ist nahe seines der Stirnseite 26 zugewandten Endes in einem aus Wärmeisolationsmaterial 16 gebildeten Befestigungselement 27 gehalten, welches auf der der Wärmeisolationsschicht 16 zugewandten Außenseite innerhalb der Wärmeisolationsschicht 16 festgesetzt ist und welches eine die Außenkontur des Rohrkörpers 24 formschlüssig umgreifende Aufnahmeöffnung 28 aufweist. Diese ist zum Innenbehälter 15 hin randoffen ausgebildet, um den wärmeleitenden Kontakt der Rohrwandung des Rohrkörpers 24 zum Innenbehälter 15 hin in ihrer den Rohrkörper am Innenbehälter 15 halternden Befestigungsposition nicht zu behindern. Der Rohrkörper 24 ist ferner unterhalb des Befestigungselementes 27, zu seiner Stirnseite 25 hin an seiner Außenkontur von einer ihn am Innenbehälter 15 haltenden Klebefolie 29 umgeben, um sicherzustellen, daß die Rohrwandung des Rohrkörpers 24 vor dem Einbringen des Wärmeisolationsmaterials 16 in wärmeleitenden Kontakt mit dem Innenbehälter 15 steht und der wärmeleitende Kontakt auch während des Einbringens des Wärmeisolationsmaterials 16 nicht aufgehoben wird. Nach dem Einbringen des in flüssigen Ausgangskomponenten vorliegenden Wärmeisolationsmaterials 16 wird durch dessen Aufschäumen der Rohrkörper eingebettet und dessen dem Innenbehälter 15 zugewandter Rohrwandungsabschnitt in wärmeleitenden Kontakt an den Innenbehälter 15 gepreßt. Durch die wärmeleitende Kontaktierung der Rohrwandung des Rohrkörpers 24 mit der der Wärmeisolationsschicht 16 zugewandten Außenseite des Innenbehälters 15 ist eine ausreichend genaue Temperaturübertragung der im Gefrierraum 12 herrschenden Temperatur auf den Temperaturfühler 23 gewährleistet.

## Patentansprüche

1. Haushaltskältegerät (10) mit einem ein Außengehäuse (17), einen Innenbehälter (15) und eine dazwischenliegende Wärmeisolationsschicht (16) aufweisenden wärmeisolierenden Gehäuse (14), innerhalb welchem wenigstens ein von einer wärmeisolierenden Tür (13) abschließbarer Kälteraum (12) angeordnet ist, dessen Raumtemperatur von einem wärmeisolationsseitig angeordneten Temperaturfühler (23) erfasst ist, **dadurch gekennzeichnet, dass** der Temperaturfühler in einer die Wärmeisolation (16) des Gehäuses (14) durchdringenden, den Temperaturfühler (23) aufnehmenden Aufnahme (24) angeordnet ist und in der ihn aufnehmenden Aufnahme (24) zur Temperaturerfassung im Kälteraum (12) in wärmeleitendem Kontakt an die der Wärmeisolation (16) zugewandte Außenseite des Innenbehälters (15) herangeführt ist.

2. Haushaltskältegerät nach Anspruch 1, **dadurch gekennzeichnet, dass** die Aufnahme als Rohrkörper (24) ausgebildet ist, welcher wenigstens weitestgehend in die Wärmeisolation (16) des Gehäuses (14) eingebettet ist und den Temperaturfühler (23) aufzunehmen und wenigstens annähernd zu führen vermag.

3. Haushaltskältegerät nach Anspruch 2, **dadurch gekennzeichnet, dass** der Rohrkörper (24) außenseitig an einer der Seitenwände des Innenbehälters (15) angeordnet und dort festgesetzt ist.

4. Haushaltskältegerät nach einem der Ansprüche 2 oder 3, **dadurch gekennzeichnet, dass** der Rohrkörper (24) einseitig verschlossen ausgebildet ist und mit seiner verschlossenen Stirnseite (25) voraneilend innerhalb der Wärmeisolation (16) angeordnet ist.

5. Haushaltskältegerät nach einem der Ansprüche 2 bis 4, **dadurch gekennzeichnet, dass** der Rohrkörper (24) im Bereich seiner der verschlossenen Stirnseite (25) gegenüberliegenden offenen Stirnseite (26) in einem am Gehäuse (14) festgesetzten Befestigungselement (27), die Materialstärke der Wärmeisolation (16) durchdringend, gehalten ist.

6. Haushaltskältegerät nach einem der Ansprüche 2 bis 5, **dadurch gekennzeichnet, dass** der Rohrkörper (24) einen zylindrischen Querschnitt aufweist und an seiner offenen Stirnseite (26) mit einer entfernbaren Abdeckung (19) versehen ist.

## Claims

1. Household cooling appliance (10) with a thermally insulating housing (14) which comprises an outer housing (17), an inner container (15) and a thermal insulation layer (16) disposed therebetween and within which at least one cooling compartment (12), which is closable by a thermally insulating door (13) and the compartment temperature of which is detected by a temperature sensor (23) arranged at the side of the thermal insulation, is arranged, **characterised in that** the temperature sensor is arranged in a receptacle (24), which penetrates the thermal insulation (16) of the housing (14) and receives the temperature sensor (23), and for temperature detection in the cooling compartment (12) the temperature sensor is guided in the receptacle (24), which receives it, to be in thermally conductive contact with the outer side, which faces the thermal insulation (16), of the inner container (15).

2. Household cooling appliance according to claim 1, **characterised in that** the receptacle is constructed as a tubular body (24) which is embedded for at least the major part in the thermal insulation (16) of the housing (14) and is capable of receiving and at approximately guiding the temperature sensor (23).

3. Household cooling appliance according to claim 2, **characterised in that** the tubular body (24) is arranged on the outer side at one of the side walls of the inner container (15) and is fixed there.

4. Household cooling appliance according to one of claims 2 and 3, **characterised in that** the tubular body (24) is constructed to be closed at one end and is arranged with its closed end face (25) foremost within the thermal insulation (16).

5. Household cooling appliance according to one of claims 2 to 4, **characterised in that** the tubular body (24) is held in the region of its open end face (26) opposite the closed end face (25) in a retaining element (27), which is fixed at the housing (14), with penetration of the material thickness of the thermal insulation (16).

6. Household cooling appliance according to one of claims 2 to 5, **characterised in that** the tubular body (24) has a cylindrical cross-section and is provided at its open end face (26) with a removable cover (19).

## Revendications

1. Réfrigérateur domestique (10) avec un boîtier calorifuge (14) comprenant un boîtier extérieur (17), un conteneur intérieur (15) et une couche d'isolation calorifuge (16) située entre les deux, à l'intérieur duquel se trouve au moins un espace frigorifique (12) pouvant être fermé par une porte calorifuge (13) et dont la température est saisie par une sonde de température (23) située sur le côté de l'isolation calorifuge, **caractérisé en ce que** la sonde de température est placée dans un logement de réception (24) de la sonde de température (23) qui traverse l'isolation calorifuge (16) du boîtier (14) et est amenée, dans son logement de réception (24), en contact thermoconducteur avec le côté extérieur du conteneur intérieur (15) tourné vers l'isolation calorifuge (16) afin de saisir la température dans l'espace frigorifique (12).

2. Réfrigérateur domestique selon la revendication 1, **caractérisé en ce que** le logement est exécuté en tant que corps tubulaire (24) qui est noyé, au moins le plus possible, dans l'isolation calorifuge (16) du boîtier (14) et est capable de recevoir la sonde de température (23) et de la guider, au moins approximativement.

3. Réfrigérateur domestique selon la revendication 2, **caractérisé en ce que** le corps tubulaire (24) est situé sur le côté extérieur d'une des parois latérales du conteneur intérieur (15), où il est fixé.

4. Réfrigérateur domestique selon l'une des revendications 2 ou 3, **caractérisé en ce que** le corps tubulaire (24) est exécuté de manière à être fermé sur un côté et est placé à l'intérieur de l'isolation calorifuge (16) avec son côté frontal fermé (25) en avant.

5. Réfrigérateur domestique selon l'une des revendications 2 à 4, **caractérisé en ce que** le corps tubulaire (24) est maintenu, dans la zone de son côté frontal ouvert (26) opposé au côté frontal fermé (25), dans un élément de fixation (27) fixé sur le boîtier (14), de manière à traverser l'épaisseur du matériau de l'isolation calorifuge (16).

6. Réfrigérateur domestique selon l'une des revendications 2 à 5, **caractérisé en ce que** le corps tubulaire (24) a une section transversale cylindrique et est pourvu, sur son côté frontal ouvert (26), d'un couvercle amovible (19).
